# EUROPEAN PATENT APPLICATION

(11) **EP 4 079 415 A1**
(43) Date of publication of application: **26.10.2022**
(21) Application number: 21169512.7
(22) Date of filing: 20.04.2021
(51) Int. Cl.: B05B 12/00

(54) **METHOD AND DEVICE FOR DETERMINING A DISTANCE IN AEROSOL ENVIRONMENT**

(71) Applicant: Proxcontrol IP B.V., 1976 BC Ijmuiden (NL)
(72) Inventor: KEIJ, Rob, 1976 BC IJmuiden (NL); SERRUIJS, Remy Michel, 1976 BC IJmuiden (NL); NIEUWENBURG, Ronnie Jacobus Samuel, 1976 BC IJmuiden (NL)
(74) Representative: V.O.

(57) **Abstract**

For determining distance between a spray gun for applying a coating fluid to a surface, a distance sensor (106) may be placed on the spray gun (140). The sensor (106) will provide values related to distance between the spray gun (140) and the surface, but also values related to distance between the spray gun (140) and aerosol particles. From all these values, the distance between the spray gun (140) and the surface is estimated by checking whether values received are valid for the distance to the surface by means of a distance tolerance criterion. The distance tolerance criterion may be based on previous values. Values meeting the criterion in a set are used for providing an estimate of the distance to the surface, for example by providing a median or average.

## Description

### TECHNICAL FIELD

The invention relates to a sensor kit for a spray gun and processing of data received from the sensor kit and more in particular to determining distance between objects in an environment comprising small airborne particles, for example liquid droplets or an atomised fluid.

### BACKGROUND

Spray painting is a technique of using a spray gun to spray a coating through the air onto a surface. The coating may be a paint, ink, varnish, clear coat, or any other type of coating. A spray gun may be hand-held by an operator, and it may require significant skill to apply a thin coating with consistent layer thickness. Whether or not the operator has skill, final thickness of the layer may vary, which may have an impact on durability of the coating and reliability of sensors covered by the coating, like proximity radar systems of cars.

### SUMMARY

A first aspect provides, in an electronic data processor, a method of determining a distance between a distance sensor connected to a spray a coating fluid applicator and a surface during spray coating of the surface. The method comprises receiving, over time, from the sensor, data values indicative of a distance between the sensor and a detected object, obtaining a distance tolerance criterion for a valid distance value to be met and applying the distance tolerance criterion to the received values. A set of received data values received in a pre-determined time interval is determined and, based on data values meeting the distance tolerance criterion, at least one base value indicative of a distance between the sensor and the surface is determined. The base value is made available for output by the electronic data processor.

Due to airborne particles, like droplets of a coating fluid, dust particles, other, or a combination thereof, distance values provided by the distance sensor may not only provide an indication of a distance between the surface, but certain values may also provide an indication of a distance between the sensor and particles. The particles will result in distance values having a distance between 0 and the distance between the sensor and the surface to be coated. These value will be present in a signal from the distance sensor, as well as values that actually do indicate the actual distance between the sensor and the surface to be coated or being coated. The distance tolerance criterion is applied to filter out the latter values. Such distance tolerance criterion may be implemented in various ways, as will be apparent from options provided below.

The distance tolerance criterion to be applied to a received value may be determined on at least one previous received value. At least some distance measurements by the distance sensor will be measurements of a distance between the sensor and the surface. Such measurements provide a valid measurement value and may provide a basis to determine whether a subsequent value - directly subsequent or later value - is a valid value.

The applicable received values forming a basis for the distance tolerance criterion may be comprised in the set. As such, the set may be formed prior to obtaining the distance tolerance criterion and the distance tolerance criterion is applied once the values are in the set. Non-valid values may subsequently be removed from the set. If only one value serves as the previous received value for obtaining the distance tolerance criterion, this may be executed prior to or after determining the set. These options may be applied in combination with further options described above and below.

The distance tolerance criterion may be a fixed difference value. Such may be a difference between a reference value - either fixed or based on multiple previous values - or a previously acquired value on one hand and the difference value on the other hand.

The distance tolerance criterion may further be based on a time interval between the received value and the previous received value. A nozzle providing coating fluid, preferably in atomised state, may move during the application procedure. For a spray nozzle, there is a maximum speed of movement. This may be determined by weight of the spray equipment, by a maximum speed of a robot carrying the spray equipment, by human anatomy, other, or a combination thereof. Based on difference between two measurement values and the time difference between them, the - hypothetical - speed of movement of the spray equipment to which the sensor is connected may be determined. With the time interval being known - fixed sampling frequency -, a maximum realistic difference between two values may be determined. If the difference is too high, the measured value is considered to be non-valid.

Received values not meeting the distance tolerance criterion may be excluded in the determined set. In this way, non-valid values do not put a burden on processing power and memory capacity of the system.

The method may further comprise determining a further set of further received data values received in a further pre-determined time interval, wherein the further set of further received data values overlaps with the set of received data values. Data may be acquired as for example a median or average or similar type of value over a sliding window or fixed window.

The method may further comprise providing at least part of the data values meeting the distance tolerance criterion as base values at the output of the electronic data processor. Of the valid values, a median, average or similar characterising value may be provided. Alternatively or additionally, all or at least a plurality of valid values may be provided at an output.

The distance criterion may comprise a requirement that the data values based on which the base value is to be determined is a pre-determined amount of the highest values in the determined set. The particles are present between the surface and the spray orifice. Hence, the highest values provided by the sensor, save errors, are values indicating distance between the nozzle and the surface. And values in between indicate distance between sensor and particles.

The distance tolerance criterion may be implemented by means of a filter. Such filter may be a median filter, average filter, LULU filter, other smoothing filter or a combination thereof. Such distance tolerance criterion may be combined with other criteria.

The method may further comprise receiving a distance compliance criterion and comparing the base value to the distance compliance criterion. If the base value complies with the distance compliance criterion, a first signal value is provided at an output of the electronic data processor; and if the base value does not comply with the distance compliance criterion, a second signal value is provided at the output of the electronic data processor. In case of both automated spray coating processes as well as manual spray coat processes, distance between the nozzle and the surface is important. Preferably, this distance is kept within a particular interval - which may serve as the distance compliance criterion. Based on compliance with that, feedback may be provided: a green light if the distance is within the interval, a red light if the distance is outside the interval. Alternatively or additionally, feedback may be provided by means of sound, haptic feedback, other visual feedback, other, or a combination thereof.

The method may further comprise providing a third signal value at the output of the electronic data processor, the third signal value being indicative of the base value. Rather than or in addition to, operators may prefer to receive data on the actual distance between the nozzle and the surface. For automated processing, this may be preferred in general.

A second aspect provides a device for a method of determining a distance between a distance sensor connected to a spray applicator for spraying a coating fluid and a surface during spray coating of the surface. The device comprises a distance sensor arranged to determine a distance between the sensor and an object and an electronic data processor. The electronic data processor is arranged to receive, over time, from the sensor, data values indicative of a distance between the sensor and a detected object, determine a set of received data values received in a pre-determined time interval obtain a distance tolerance criterion for a valid distance value to be met, apply the distance tolerance criterion to the values in the determined set, determine, based on data values meeting the distance tolerance criterion, at least one base value indicative of a distance between the sensor and the surface and make the base value available for output by the electronic data processor.

A third aspect provides a spray applicator for a coating fluid arranged to spray the coating fluid from a spray orifice in a spray direction, the applicator having the device according to the second aspect connected thereto, wherein the distance sensor senses distance in a sensing direction; and the device is connected to the applicator such that the spray direction is substantially parallel to the sensing direction. Such spray applicator, with the device connected to it - or arranged to have the device connected to it - may provide enhanced feedback and control of the spray applicator by a person or machine.

In the spray applicator a sensing line from the distance sensor in the sensing direction may be offset relative to a spray line from the spray orifice in the spray direction. With the sensing line coinciding or being very close to the spray line, the signal from the distance sensor may predominantly provide values related to distances to particles, rather than distances to the surface to be coated. By moving these lines apart, this issue is alleviated.

### BRIEF DESCRIPTION OF THE DRAWINGS

The various aspects and variations thereof will be discussed in further detail in conjunction with drawings. In the Figures,
Figure 1: shows a schematic overview of an example of a sensor kit, a spray gun and a surface;
Figure 2: shows a first flowchart; and
Figure 3: shows a second flowchart.

### DETAILED DESCRIPTION

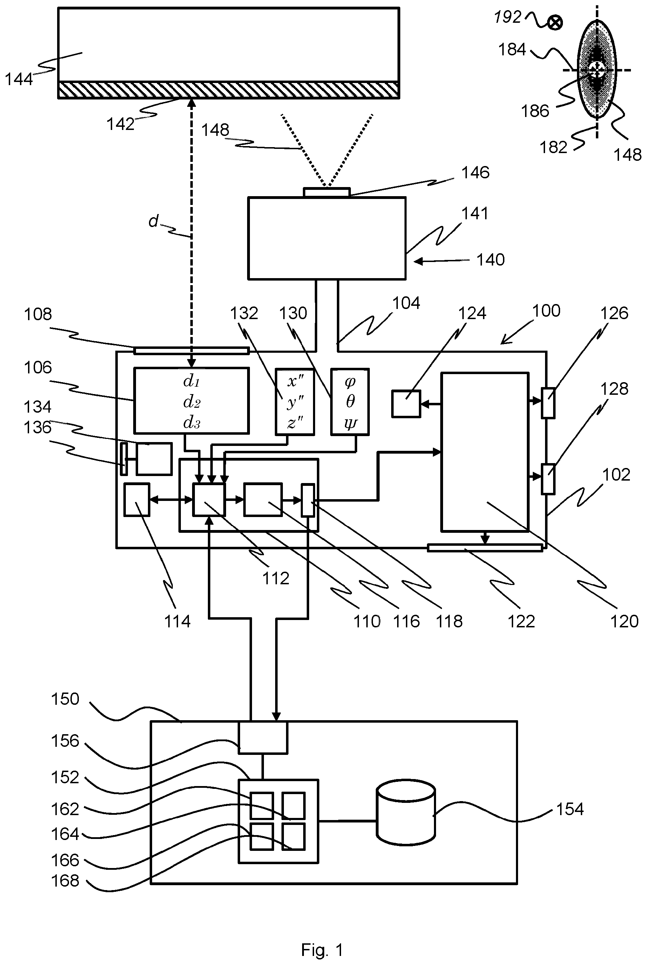

Fig. 1 depicts a schematic overview of an embodiment of a sensor kit 100 comprising a sensor kit body 102 as a housing. The sensor kit body 102 comprises a spray gun connector 104 as a connection module. A spray gun 140 is connected to the body 102 via the connector 104. The spray gun 140 comprises a spray gun housing 141. The spray gun 140 may for example be a High Volume Low Pressure (HVLP) spray gun.

Although the sensor kit body 102 is in Fig. 1 depicted schematically as a rectangle, in different embodiments the body 102 may have a different shape. For example, the body 102 can be shaped around the shape of the spray gun housing 141 to which it is arranged to be connected. The shape of the body 102 and/or centre of gravity of the sensor kit 100 may also be adapted such that, when attached to spray gun 140, the centre of gravity of the spray gun 140 is kept within a desired range. As such, handling of the spray gun 140 may be minimally affected by connecting the sensor kit 100.

The spray gun 140 may be used for applying a layer of paint 142 as a coating on a car body part 144 as a surface. The spray gun 140 comprises a nozzle 146 from which a mist of aerosol paint 148 can be expelled, and an input for receiving the paint as a coating substance. The spray gun 140 may be a hand-held spray gun 140, comprising a trigger which a user can operate to control expelling of paint 148 from the spray gun 140 at a certain rate.

The trigger may control a throughput area of a conduit leading paint or another coating fluid to the nozzle. Alternatively or additionally, the trigger - or another trigger or a control knob - may control a position of a control needle in a throughput orifice, for example the nozzle 146 or another orifice. In one embodiment, a control needle may be used to accurately control a flow of coating fluid and a trigger may be used to switch between an "on" an "off' state of the nozzle. In addition to the accurate control mechanism, the flow of coating fluid may also be control be varying pressure under which the coating fluid is provided. One or more of the precision control settings, the coating fluid pressure and the trigger state may be considered as optional spray job parameters.

The user can move and re-orientate the spray gun 140 as desired, and thus move it further away from the car body part 144 or closer to the car body part 144 with a certain speed and acceleration. The user can further orientate the spray gun 140 as desired, and thus change the orientation of the nozzle 146 relative to the car body part 144 such that paint can be applied from different angles of approach.

Provided in the sensor kit body 102 is a distance sensor module 106 comprising one or more time-of-flight sensors as proximity sensors comprised by the distance sensor module 106. The time-of-flight sensors are arranged for obtaining distance data as spray job parameter values on distances di, d₂ and d₃ between each of the sensors and the car body part 144 and/or the layer of paint 142. As such, the time-of-flight sensors in the distance sensor module 106 preferably face the same direction as the nozzle 146 when the sensor kit 100 is connected to the spray gun 140, as the nozzle 146 will also face the car body part 144 and/or the layer of paint 142.

The inset at the upper right of Figure 1 shows the position of a time of flight sensor of the distance sensor module 106 relative to the nozzle 146 and a spay cone of the mist of aerosol paint 148. Commonly used spray guns provide a conical mist 148 of aerosol paint as a coating. The cross-section of the cone may be circular or elliptical. In the inset, an elliptical cross-section shown, from the point of view of the spray gun 140. Furthermore, a sensing direction 192 of the field of view sensor of the distance sensor module 106 is shown and a spray direction 186 are shown, which is in this case away from the point of view.

As such, the inset shows that the sensing direction, here represented as a sensing line from the time of flight sensor in the sensing direction towards the car body part 144, is substantially parallel to and offset from the spray direction, represented by a spray line from the nozzle 146, in the spray direction towards the car body part 144. More in particular, the sensing line is offset from at least one of the major axis and the minor axis of the elliptical cross-section of the spray cone 148. Preferably, the offset from the major axis is larger than from the minor axis.

The time-of-flight sensors as the proximity sensor may comprises a laser or LED as an optical transmitter arranged to emit a laser beam as an emitted optical signal. The time-of-flight sensors may further comprise an optical receiver for receiving a reflected optical signal as a reflection of the laser beam. A proximity processor may be used to determine a spray distance between the time-of-flight sensors and the surface 144 based on a relation between the emitted laser beam and the reflected laser beam.

The emitted optical signal may have a near infrared wavelength spectrum, for example between 800 and 1140 nm, more in particular between 900 nm and 1000 nm and most preferably 940nm. Electromagnetic radiation of such wave is not visible; it may travel through substance that may seem opaque to the human eye, but is transparent for electromagnetic radiation between 900 nm and 1000 nm and 940 nm in particular.

The sensor kit body 102 may comprise non-translucent materials, and as such light emitted by the time-of-flight sensors may be hindered by the sensor kit body 102. In the embodiment of Fig. 1, the sensor kit body 102 comprises as an option an at least partially translucent viewing window 108 through which light emitted by and reflected back to the time-of-flight sensors can pass. Alternatively, at least part of the sensor kit body 102 through which light should pass may be made of material which is at least partially translucent for wavelengths of light used by the time-of-flight sensors, which may for example be wavelengths in the infra-red spectrum.

In one embodiment, the time of flight sensors are spaced apart at such distance that at a normal spraying distance, between 20 centimetres and 50 centimetres, their lights do not interfere. As such, different values for the distances d1, d2 and d3 may be obtained.

In the embodiment of Fig. 1, the sensor kit 100 comprises a microcontroller 110 as a processing unit. The microcontroller 110 comprises a data input 112 as an input module, arranged to receive one or more reference parameter values. The received reference parameter values may be stored on a memory 114. Distance data may be sent by the time-of-flight sensor 106 to the data input 112 of the microcontroller 110, and also optionally stored on the memory 114.

The microcontroller 110 is in the embodiment of the sensor kit 100 provided inside the sensor kit body 102. Embodiments of the sensor kit 100 are also envisioned wherein another microcontroller as part of the processing unit is provided outside the sensor kit body 102. This other microcontroller may for example be comprised by one or more external computer devices, such as a server, smartphone, tablet, any other computer device, or any combination thereof.

When at least part of the processing unit is provided outside the sensor kit body 102, a wired or wireless connection may be provided between the sensor module and the microcontroller 110 such that exchange of data is made possible. When a wireless connection is used, for example an NFC, Bluetooth, Wi-Fi or any other protocol can be used for exchange of data.

The microcontroller 112 as a processing unit further comprises a comparison module 116 arranged to compare at least part of the obtained spray job parameter values to corresponding one or more reference parameter values. The comparison module 116 may thus be arranged to receive at least part of the spray job parameter values and at least part of the reference parameter values, for example from the data input 112, and/or retrieve at least part of the spray job parameter values and at least part of the reference parameter values from the memory 114.

The comparison module 116 is further arranged to generate a comparison data signal based on the outcome of the comparison. The comparison data signal may be received by an output module 118, which may be arranged to and used to send the comparison data signal to other components of the sensor kit 100. In embodiments, the output module 118 may be comprised by the processing unit, the comparison module, the sensor module, or by the sensor kit 100 in general.

The data input 112 may be arranged for receiving user identification data, which may be indicative of a specific user or group of users. For example, user identification data may comprise employer data, a name, and/or any other data from which a specific user of group of user may be identified. The user identification data may be stored on the memory 114. When user identification data is stored on the memory 114, the particular sensor kit 110 may be linked to a specific user.

For providing feedback to a user using the spray gun 140 with the sensor kit 100, a feedback controller 120 as a user feedback module is comprised by the sensor kit 100. The feedback controller 120 is arranged to generate a user feedback signal based on at least part of the comparison data signal. The feedback controller 120 may further be arranged to receive at least part of the comparison data signal from the data output 118 and/or retrieve at least part of the comparison data signal from the memory 144.

In the embodiment of Fig. 1, the feedback controller 120 is provided inside the sensor kit body 102. Embodiments are also envisioned wherein at least part of the feedback controller 120 is provided outside the sensor kit body 102. In such embodiments, at least part of the generated feedback signal may be sent via a wired or wireless connection to an external feedback device, such as a speaker, display, or light.

The feedback controller 120 is in the embodiment of Fig. 1 connected to a display 122 as an actuator, arranged for providing a visual signal based on the feedback signal. The display 122 is depicted as being placed in the sensor kit body 102. In embodiments, the display 122 may also be placed at a different location, and the display 122 may for example be a display of a smartphone, tablet, head-up display (HUD), smartwatch, smart glasses, or any other display.

The feedback controller 120 may also be connected to an LED module 124 comprising at least one and preferably more LEDs - light emitting diodes - as actuators and light sources in particular for providing feedback. Preferably, the LED module 124 comprises a red light source and a green light source. The red light may be actuated if the comparison module 116 determines that one or more spray job parameter value are out of bounds relative to one or more reference parameter value or reference intervals. If the one or more spray job parameter value are within bounds relative to one or more reference parameter value or reference intervals, the green light may be actuated.

For obtaining orientation data indicative of an orientation of the spray gun 140, embodiments of the sensor kit 100 may comprise an orientation sensor 130 which may be an absolute or a relative orientation sensor 130. The orientation sensor 130 may comprise a magnetometer, accelerometer, compass, gyroscope, any other sensor or any combination thereof. The orientation sensor 130 is arranged to measure angles of the sensor kit and preferably an angle relative to a horizontal plane. Preferably, the orientation sensor is arranged to provide three signals indicative of a first rotation ϕ over a first axis perpendicular to the spray direction of the nozzle 146, a second rotation θ over a second axis perpendicular to the spray direction and perpendicular to the first axis and a third rotation ψ over a third axis parallel to the spray direction.

As such, the orientation data may comprise data indicative of a roll, yaw and pitch of the spray gun 140. Because the housing body 102 is preferably rigidly connected to the spray gun 140, the roll, yaw, and pitch of the orientation sensor 130 may substantially correspond to the roll, yaw, and pitch of the spray gun 140 or may at least be transformed to the roll, yaw, and pitch of the spray gun 140. Any output parameter or parameters of the orientation sensor 130 may be considered as optional spray job parameters.

Additionally or alternatively, the orientation sensor 130 is arranged to determine at least one angle of the orientation sensor relative to a reference plane. The reference plane may for example be a horizontal plane, a vertical plane, or a plane representing the surface 144 on which the coating 142 is to be applied.

For obtaining movement data indicative of a movement of the spray gun 140, embodiments of the sensor kit 100 may comprise an accelerometer 132 as an example of a movement sensor. The accelerometer 132 is preferably arranged to provide three signals indicative of accelerations in three directions. In a preferred implementation, a first acceleration is measured in a first direction x, a second direction y and a third direction z. In a more preferred embodiment, each direction is parallel to an axis of rotation as discussed above. For example, the first direction is parallel to the first axis, the second direction is parallel to the second axis and the third direction is parallel to the third axis, though other options may be envisaged as well.

The movement data may comprise data indicative of a speed and/or acceleration of the spray gun 140 in one or more directions. Because the housing body 102 is preferably rigidly connected to the spray gun 140, the speed and/or acceleration of the movement sensor 132 may substantially correspond to the speed and/or acceleration of the spray gun 140 or may at least be transformed to the speed and/or acceleration of the spray gun 140. One or more of the speed and acceleration - either as scalar or vector - may be considered as optional spray job parameters.

As an option, the embodiment of the sensor kit 100 as shown in Fig. 1 comprises a speaker 126 as an actuator and as a speaker in particular for providing an audio signal based on the feedback signal, connected to the feedback controller 120. Depending on the feedback signal, the audio signal may for example have a different volume and/or frequency to indicate a specific type of feedback to the user.

As a further option, the embodiment of the sensor kit 100 as shown in Fig. 1 comprises a vibration unit 128 as an actuator and as a haptic module in particular for providing a vibration as a haptic signal based on the feedback signal connected to the feedback controller 120. The vibration may be transferred via the connection 104 to the spray gun body 141 which may be held by the user of the spray gun 140. Hence, the user may feel the vibration when holding the spray gun 140.

As an even further option, embodiments of the sensor kit 100 are envisioned wherein the sensor module comprises a temperature sensor for obtaining temperature data indicative of a temperature of the surface 144 that is to be spray painted. In such embodiments, the reference parameter values may comprise a minimum temperature the surface 144 should have. If the comparison module provides a comparison data signal indicative that the temperature of the surface 144 is lower than the minimum temperature, the user feedback module may indicate to the user that the temperature of the surface 144 is too low.

For powering components of the sensor kit 100 requiring electrical energy, the sensor kit 100 may comprise a battery 134 on which electrical energy may be stored. In particular embodiments, the sensor kit housing 102 is substantially sealed, for example to prevent fluids from entering the housing and/or to prevent electrical components to be exposed to paint fumes. Being substantially sealed, it may not be possible to use a wired connection for charging the battery 134 and/or to easily replace a depleted battery.

A coil 136 as a wireless charging module for charging the battery 134 may be comprised by the sensor kit 100, and may be placed inside the sensor kit housing 102 together with the battery 134. By using for example inductive charging, electrical energy may be supplied to the battery 134 via the coil 136. Because this transfer of electrical energy is wireless, no connector has to be placed in the housing 102 and no electrical components have to be exposed to ambient air which may contain flammable coating substances in aerosols.

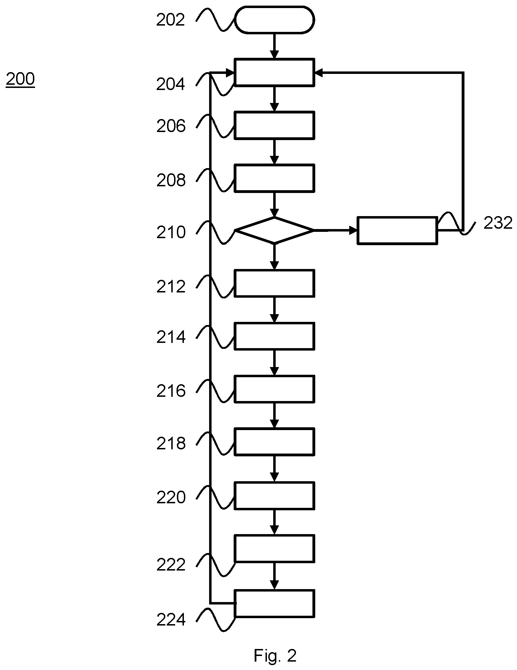

An embodiment of a method of processing data received from the time of flight sensors or other distance sensors that may be used is schematically depicted by a first flowchart 200 as shown in Fig. 2, and will be elaborated on in conjunction with Fig. 1. It will be understood that the method may also be applied in conjunction with other embodiments of the sensor kit 100, and that the sensor kit 100 of Fig. 1 may be used in conjunction with other embodiments of the method depicted by the first flowchart 200. The various parts of the flowchart 200 are briefly summarised below:
- 202: start
- 204: obtain value from sensor
- 206: retrieve previous obtained value
- 208: determine criterion
- 210: discard obtained value complies with criterion?
- 212: include value in median set
- 214: determine median of median set
- 216: discard oldest value in set
- 218: include median in average set
- 220: determine average in average set
- 222: provide average as base value
- 224: discard oldest value in average set

The procedure starts in a terminator 202 and proceeds by obtaining a sensor value from the sensor in step 204. The sensor value may directly be an actual distance value, but it may also be another value indicative of the actual distance. In step 206, one or more previously obtained values are obtained from an electronic memory comprised by the device in which it has been stored before, preferably validly obtained values, a median thereof, an average thereof, another process value based thereon, or a combination thereof.

In step 208, a validity criterion is determined. The validity criterion may be retrieved from a memory as a pre-determined value or operation. As an operation, the criterion may be a filter, like a smoothing filter or a median filter. As a value, it may be an absolute value or a relative value - a percentage -, relative to the obtained value, a previously obtained value or a value based on one or more earlier obtained values.

The value may also be based on a sampling rate of the time of flight sensor or other distance sensor. As such, a criterion may be that the spray gun 140 can move with only a particular maximum speed. If, based on the previously obtained distance value and the time period between samples, it appears that the spray gun 140 would have moved with a speed that is too high, the criterion may be that the obtained value is not valid - and may be caused by measuring a droplet of coating fluid, rather than the surface of the car body part 144. The validity criterion is preferably stored in an electronic memory comprised by the device.

In step 210, the obtained value is assessed to the criterion as obtained or determined in step 208. If the obtained value is, based on the assessment, deemed not to be valid, the obtained value is discarded in step 232 and the process returns to step 204.

If the obtained value is considered to be valid, the procedure proceeds to step 212, in which the value deemed valid is included in median set. In step 214, a median value of the values in the median set is determined and this value is returned. Subsequently, for creating a sliding window, the oldest value in the median set is discarded in step 216. In an embodiment with a non-sliding window, no values are discarded and no processing is performed until the set is full and after determining the median - or average or other value - the full set is discarded after the processed value is returned.

In step 218, the median value is included in an average set. In step 220, the average of values in the average set is determined and the resulting value is provided in step 222 as a base value, indicative of a distance between the sensor and the surface of the car body part 144 and in that way, a distance between the nozzle 146 and the car body part 144. Calculating the average based on medians is optional and the order may be reversed. Subsequently, the oldest value in the set is discarded in step 224 if a sliding window approach is used and the process branches back to step 204.

The base value is used for further data processing by the sensor kit 100 and the comparison module 116 in particular. In the comparison module, the base value for the distance between the sensor module 106 and the surface 144 is used as a spray job parameter values to be compared with a reference parameter value for the distance, for example as described above in conjunction with Figure 1.

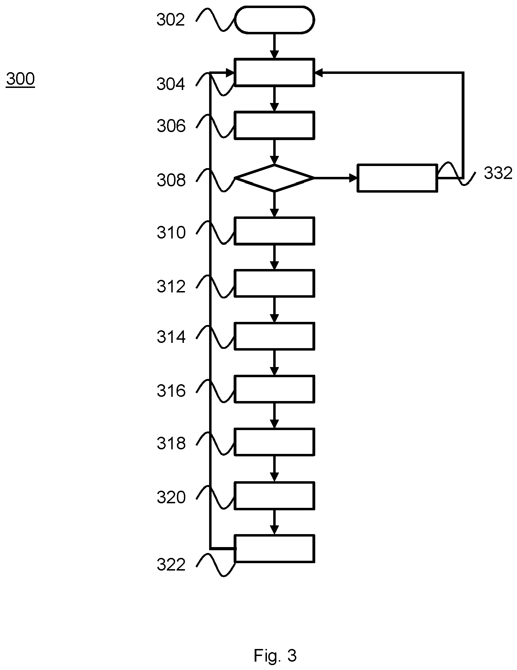

Another example of a method of processing data received from the time of flight sensors or other distance sensors that may be used is schematically depicted by a first flowchart 300 as shown in Fig. 3, and will be elaborated on in conjunction with Fig. 1. It will be understood that the method may also be applied in conjunction with other embodiments of the sensor kit 100, and that the sensor kit 100 of Fig. 1 may be used in conjunction with other embodiments of the method depicted by the second flowchart 300. The various parts of the second flowchart 300 are briefly summarised below:
- 302: start procedure
- 304: obtain distance value
- 306: include obtained value in set
- 308: set full?
- 310: obtain criterion
- 312: determine amount of highest values
- 314: select highest values in amount
- 316: determine median
- 318: output value
- 320: discard set

The procedure starts in a terminator 302 and proceeds to step 304 in which a distance value is obtained, as discussed above as well. In step 306, the distance value is included in a set stored in an electronic memory comprised by the device. If it is determined in step 308 that the set is not yet full, another distance value is obtained in step 304 and included in the set in step 306. If the set is determined to be full, the procedure continues to step 310 from step 308. In 310, a criterion is obtained from an electronic memory comprised by the device for determining whether values included in the set are valid values for a distance between the distance sensor and the car body part.

The distance criterion may be obtained as discussed above in conjunction with Figure 2 and the second flowchart. Alternatively or additionally, the criterion may be defined as that valid values are to be present in the set among the 10% highest values in the set or that the values within 10% of the highest value in the set are valid values. Instead of 10%, values like 1%, 2%, 3%, 4%, 5%, 7%, 8% or 15% may be used - or any other relative margin.

In step 312, the value deemed to satisfy the criterion are selected and the other values in the set may be discarded or kept. In step 314, the median of the values deemed valid is determined. Alternatively or additionally, the average is obtained. In another alternative, the criterion assessment is skipped and the median of all values in the set is applied as a criterion for selecting the median value as valid. As such, the median value of the set, the average value of values in the set or another otherwise result of filtering values, preferably using a smoothing filter like a median filter or LULU filter, may be used and provided at an output.

The base value is used for further data processing by the sensor kit 100 and the comparison module 116 in particular. In the comparison module, the base value for the distance between the sensor module 106 and the surface 144 is used as a spray job parameter values to be compared with a reference parameter value for the distance, for example as described above in conjunction with Figure 1.

In step 318 the set is discarded in case a fixed window processing algorithm is used. Additionally or alternatively, a moving window may be used for the processing, as discussed in conjunction with the first flowchart 200 in Figure 2. Subsequently, the procedure branches back to step 304.

The various aspects and options relate to a distance sensor providing data and to processing of that data. For determining distance between a spray gun for applying a coating fluid to a surface, a distance sensor may be placed on the spray gun. The sensor will provide values related to distance between the spray gun and the surface, but also values related to distance between the spray gun and aerosol particles. From all these values, the distance between the spray gun and the surface is estimated by checking whether values received are valid for the distance to the surface by means of a distance tolerance criterion. The distance tolerance criterion may be based on previous values. Values meeting the criterion in a set are used for providing an estimate of the distance to the surface, for example by providing a median or average.

## Claims

1. In an electronic data processor, a method of determining a distance between a distance sensor connected to a spray a coating fluid applicator and a surface during spray coating of the surface, the method comprising:
receiving, over time, from the sensor, data values indicative of a distance between the sensor and a detected object;
obtaining a distance tolerance criterion for a valid distance value to be met;
applying the distance tolerance criterion to the received values;
determining a set of received data values received in a pre-determined time interval;
determining, based on data values meeting the distance tolerance criterion, at least one base value indicative of a distance between the sensor and the surface;
making the base value available for output by the electronic data processor.

2. The method according to claim 1, wherein the distance tolerance criterion to be applied to a received value is determined on at least one previous received value.

3. The method according to claim 1 or claim 2, wherein the distance tolerance criterion is a fixed difference value.

4. The method of any of the preceding claims, where the distance tolerance criterion is further based on a time interval between the received value and the previous received value.

5. The method according to any of the preceding claims, wherein received values not meeting the distance tolerance criterion are not included in the determined set.

6. The method according to the preceding claims, wherein the base value is at least one of a median or an average of the data values in the set.

7. The method according to any of the claims 2 to 6, to the extent dependent on claim 2, wherein the distance criterion comprises a requirement that the data values based on which the base value is to be determined is a pre-determined amount of the highest values in the determined set.

8. The method of claim 7, wherein the pre-determined amount is based on the total amount of data values in the set.

9. The method according to any of the preceding claims, further comprising receiving a distance compliance criterion, the method further comprising:
comparing the base value to the distance compliance criterion;
if the base value complies with the distance compliance criterion, providing a first signal value at an output of the electronic data processor; and
if the base value does not comply with the distance compliance criterion, providing a second signal value at the output of the electronic data processor.

10. A device for a method of determining a distance between a distance sensor connected to a spray applicator for spraying a coating fluid and a surface during spray coating of the surface, the device comprising:
a distance sensor arranged to determine a distance between the sensor and an object;
an electronic data processor arranged to:
receive, over time, from the sensor, data values indicative of a distance between the sensor and a detected object;
determine a set of received data values received in a pre-determined time interval;
obtain a distance tolerance criterion for a valid distance value to be met;
apply the distance tolerance criterion to the values in the determined set;
determine, based on data values meeting the distance tolerance criterion, at least one base value indicative of a distance between the sensor and the surface;
make the base value available for output by the electronic data processor.

11. The device according to claim 10, further comprising a first actuator and a second actuator connected to an output of the electronic data processor, wherein the electronic data processor is further arranged to:
compare the base value to the distance compliance criterion;
if the base value complies with the distance compliance criterion, providing a first signal value at the output of the electronic data processor for actuating the first actuator; and
if the base value does not comply with the distance compliance criterion, providing a second signal value at the output of the electronic data processor for actuating the second actuator.

12. A spray applicator for a coating fluid arranged to spray the coating fluid from a spray orifice in a spray direction, the applicator having the device according to claim 10 or claim 11 connected thereto, wherein:
the distance sensor senses distance in a sensing direction; and
the device is connected to the applicator such that the spray direction is substantially parallel to the sensing direction.

13. The spray applicator according to claim 12, wherein a sensing line from the distance sensor in the sensing direction is offset relative to a spray line from the spray orifice in the spray direction.

14. The spray applicator according to claim 13, wherein the spray orifice is arranged to emit the coating fluid in a spray cone having an elliptical cross-section and the sensing line is offset from the major axis of the elliptical cross-section.

15. The spray applicator according to claim 13 or 14, wherein the spray orifice is arranged to emit the coating fluid in a spray cone having an elliptical cross-section and the sensing line is offset from the minor axis of the elliptical cross-section.
